# EUROPÄISCHE PATENTANMELDUNG

(11) **EP 4 047 777 A1**
(43) Veröffentlichungstag der Anmeldung: **24.08.2022**
(21) Anmeldenummer: 21158003.0
(22) Anmeldetag: 18.02.2021
(51) Int. Cl.: H02J 7/00, H02J 9/06

(54) **STROMVERSORGUNGSWAGEN**

(71) Anmelder: Schweizerische Bundesbahnen SBB, 3000 Bern (CH)
(72) Erfinder: Vögtli, Christian, 6003 Luzern (CH); Kramer, Ueli, 3067 Utzigen (CH); Burri, Julien, 2560 Nidau (CH)
(74) Vertreter: Rutz & Partner

(57) **Zusammenfassung**

Der Stromversorgungswagen (1) umfasst ein Chassis (10), das wenigstens zwei Batteriekammern (110A, 110B) aufweist, in die je eine Batterie (2A; 2B) eingesetzt oder einsetzbar ist, die an einen Wechselrichter (95) anschliessbar ist, über den elektrische Energie von den Batterien (2A, 2B) zu wenigstens einem Verbraucher (90) übertragbar ist, und eine Steuereinheit (9), mittels der der Betrieb des Stromversorgungswagens (1) steuerbar ist. Erfindungsgemäss ist vorgesehen, dass jeder Batteriekammer (110A, 110B) eine Deckeleinheit (11A, 11B) zugeordnet ist, die durch wenigstens ein Deckelscharnier (111) drehbar mit dem Chassis (10) verbunden ist und die durch wenigstens einen Verbindungsarm (36) gelenkig mit einer zugeordneten Anschlussvorrichtung (3A; 3B) verbunden ist, die entlang einer zugehörigen Laufschiene (4A; 4B) verschiebbar gelagert ist und die einen Anschlussstecker (31) hält, der achsparallel zu einer Anschlussbuchse (21) der zugehörigen Batterie (2A, 2B) ausgerichtet beim Schliessen der zugehörigen Deckeleinheit (11A, 11B) gegen die Anschlussbuchse (21) verschiebbar und beim Öffnen der zugehörigen Deckeleinheit (11A, 11B) von der Anschlussbuchse (21) lösbar ist.

## Beschreibung

Die vorliegende Erfindung betrifft einen Stromversorgungswagen für Baustellen, insbesondere Baustellen im Bereich von Eisenbahnanlagen.

Vorrichtungen zur Stromversorgung werden gemäss der DE102014115596A1 für viele Anwendungen, insbesondere auf Baustellen eingesetzt, auf denen vielfältige Verbraucher, wie Lastkräne, Hebevorrichtungen, Pumpen, Presslufthammer, Luftkompressoren, Betonrüttler und sonstige Arbeits- oder Bearbeitungsmaschinen eingesetzt und mit Strom versorgt werden müssen. Auf Baustellen von Eisenbahnanlagen werden beispielsweise Schienenschleifgeräte, Schwellenschraubgeräte, Stopfmaschinen und dergleichen eingesetzt. Für Arbeiten in Tunnels oder bei Nacht werden zudem Beleuchtungsgeräte mit Strom gespeist. Stromerzeuger werden in einphasiger oder dreiphasiger Konfiguration und mit Ausgangsspannungen, die im Allgemeinen in einem Bereich von 230 - 400 VAC liegen, und mit Nennleistungen im kW-Bereich bereitgestellt. Konventionell werden Stromerzeuger verwendet, die eine Brennkraftmaschine, z.B. einen Verbrennungsmotor, und einen damit gekoppelten Wechselstromgenerator aufweisen, wie dies in der DE102014115596A1 beschrieben ist.

Stromerzeuger mit einer Brennkraftmaschine weisen den Nachteil auf, dass die Brennkraftmaschine Luftverunreinigungen, Lärm, und Erschütterungen verursacht, welche nicht nur das Baustellenpersonal sondern auch Bewohner umliegender Gebäude und Passanten erheblich belasten. Weiterhin erfordern Brennkraftmaschinen fossile Brennstoffe, deren Verbrauch generell reduziert werden sollte, sowie regelmässig aufwändige Wartungsarbeiten mit entsprechenden Kosten.

Bekannt sind ferner Batterieboxen, die im Bereich von Baustellen aufgestellt oder mit einem Schienenfahrzeug zur Baustelle gefahren werden, um die Verbraucher mit elektrischer Energie zu versorgen. Die EP3499605A1 offenbart eine Batteriebox, die als Container ausgestaltet ist. Die Bereitstellung solcher Batterieboxen erfordert in der Regel einen erheblichen logistischen Aufwand. Sofern die Batteriebox mit einem Schienenfahrzeug zur Baustelle gefahren und dort auf dem Schienenfahrzeug bereitgestellt wird, steht das entsprechende Geleise für den weiteren Schienenverkehr nicht mehr zur Verfügung. Der Transport von Batterieboxen in einen Bereich neben den Gleisen erforderte hingegen Transportfahrzeuge mit Hebevorrichtungen, welche die Batterieboxen von Baustelle zu Baustelle transportieren und absetzen.

Der vorliegenden Erfindung liegt daher die Aufgabe zugrunde, einen verbesserten Stromversorgungswagen zu schaffen, der vorteilhafter einsetzbar ist.

Der Stromversorgungswagen, der mit Batterien anstelle einer Brennkraftmaschine ausgerüstet wird, soll mobil einsetzbar sein und für dessen Einsatz nur einen minimalen logistischen Aufwand benötigen.

Der Stromversorgungswagen soll die für die Arbeiten an der jeweiligen Baustelle erforderliche Energie bereitstellen. Dabei soll die Bereitstellung von Energie durch das Baustellenpersonal selbst bestimmt und sichergestellt werden können. D.h., die einzelnen Mitglieder des Baustellenpersonals sollen sicherstellen können, dass für die Erledigung ihrer Aufgaben genügend Energie zur Verfügung steht.

Der Stromversorgungswagen soll in einfacher Weise auch an schwierig zugänglichen Orten ohne spezielle Hebevorrichtungen allein durch Muskelkraft stationierbar sein.

Weiterhin soll der Stromversorgungswagen auch beim Wechseln von Batterien ohne Unterbruch betrieben werden können.

Das Einsetzen, Ankoppeln und Aktivieren von Batterien soll mit geringem Aufwand fast automatisch erfolgen.

Das elektrische System des Stromversorgungswagens soll zudem derart steuerbar sein, dass die installierten Batterien optimal über eine lange Betriebsdauer betrieben werden können und auch im Einzel- wie Parallelbetrieb keinen Überlastungen ausgesetzt sind.

Diese Aufgabe wird durch einen Stromversorgungswagen gemäss Anspruch 1 gelöst. Vorteilhafte Ausgestaltungen der Erfindung sind in den abhängigen Ansprüchen angegeben.

Der Stromversorgungswagen umfasst ein Chassis, das wenigstens zwei Batteriekammern aufweist, in die je eine Batterie eingesetzt oder einsetzbar ist, die an einen Wechselrichter anschliessbar ist, über den elektrische Energie von den Batterien zu wenigstens einem Verbraucher übertragbar ist, und eine Steuereinheit, mittels der der Betrieb des Stromversorgungswagens steuerbar ist. Die Batterien sind normalerweise wiederaufladbar, sodass sie praktisch unbegrenzt benutzt werden können.

Erfindungsgemäss ist vorgesehen, dass jeder Batteriekammer eine Deckeleinheit zugeordnet ist, die durch wenigstens ein Deckelscharnier drehbar mit dem Chassis verbunden ist und die durch wenigstens einen Verbindungsarm gelenkig mit einer zugeordneten Anschlussvorrichtung verbunden ist, die entlang einer zugehörigen Laufschiene verschiebbar gelagert ist und die einen Anschlussstecker hält, der achsparallel, vorzugsweise koaxial, zu einer Anschlussbuchse der zugehörigen Batterie ausgerichtet beim Schliessen der zugehörigen Deckeleinheit gegen die Anschlussbuchse verschiebbar und beim Öffnen der zugehörigen Deckeleinheit von der Anschlussbuchse lösbar ist.

Der Anwender kann daher eine Batterie in einfacher Weise einsetzen und an das elektrische System des Stromversorgungswagens anschliessen, indem er die zugeordnete Deckeleinheit öffnet, eine Batterie in die zugeordnete Batteriekammer einsetzt und die Deckeleinheit wieder schliesst. Bei diesem Vorgang wird der Anschlussstecker von der verschiebbar gelagerten Anschlussvorrichtung automatisch in die Anschlussbuchse der eingesetzten Batterie eingefahren und die Verbindung zwischen der Batterie und dem elektrischen System des Stromversorgungswagens erstellt.

Die Batterien sind in einer ersten Richtung vorzugsweise vertikal in die zugehörige Batteriekammer einsetzbar, während die zugehörigen Anschlussvorrichtungen in einer zweiten Richtung vorzugsweise senkrecht zur ersten Richtung gegen eine Anschlussseite der Batterien verschiebbar sind. Auf diese Weise können die Anschlussvorrichtungen vorteilhaft angeordnet, ausgerichtet und betätigt werden.

Zur Entnahme der Batterie wird die Deckeleinheit geöffnet. Bei diesem Vorgang wird der Anschlussstecker automatisch von der Anschlussbuchse der Batterie gelöst und weggefahren, sodass diese aus der Batteriekammer entnommen werden kann.

Die Anschlussvorrichtungen weisen vorzugsweise eine Verbindungsplatte auf, die von einem einteiligen oder mehrteiligen Vorrichtungsschlitten gehalten ist, der formschlüssig mit einer Laufschiene verbunden und entlang dieser verschiebbar ist. Die Laufschiene weist vorzugsweise ein entsprechendes Profil, z.B. ein T-Profil, auf, welches in einer entsprechenden Profilausnehmung des Vorrichtungsschlittens gehalten ist. Beim Öffnen und Schliessen der zugehörigen Deckeleinheit kann der Vorrichtungsschlitten mit der Verbindungsplatte, die durch die wenigstens eine Verbindungsstangen gelenkig mit der Deckeleinheit verbunden ist, daher nur axial entlang der Längsachse der Laufschiene vor und zurück verschoben werden.

Die Verbindungsplatte ist mit einer Steckerhalterung, von der der Anschlussstecker gehalten ist, fest oder elastisch verschiebbar verbunden. Vorzugsweise ist die Verbindungsplatte elastisch verschiebbar mit der Steckerhalterung verbunden, sodass der Anschlussstecker beim Schliessen der Deckeleinheit kontrolliert und selbstzentrierend in die Anschlussbuchse eingeführt wird. Vorzugsweise wird vorgesehen, dass wenigstens ein Federelement zwischen der Verbindungsplatte und der Steckerhalterung vorgesehen ist, durch das bewirkt wird, dass bei einer Fehlausrichtung der Verbindungsplatte die auf die Steckerhalterung einwirkende Kraft langsam und nicht ruckartig ansteigt. Sobald der Anschlussstecker auf die Anschlussbuchse trifft, übt diese eine Gegenkraft auf den Anschlussstecker aus, die bewirkt, dass das wenigstens Federelement bei einer weiteren Verschiebung der Verbindungsplatte in axialer Richtung entsprechend komprimiert wird und die Andruckkraft des Anschlussstecker ansteigt. Sobald das Federelement genügend komprimiert ist und die Andruckkraft entsprechend angestiegen ist, wird der Anschlussstecker in die Anschlussbuchse eingeschoben, vorzugsweise bevor die Verbindungsplatte die Steckerhalterung kontaktiert. Vorzugsweise werden mehrere Federelemente vorgesehen, die Druckkräfte symmetrisch verteilt auf die Steckerhalterung ausüben.

Zum Lösen des Anschlusssteckers wird die Verbindungsplatte beim Öffnen der Deckeleinheit zurückgefahren, bis durch ein Verbindungselement eine feste Verbindung zwischen der Verbindungsplatte und der Steckerhalterung resultiert und der Anschlussstecker bei einem weiteren Öffnen der der Deckeleinheit aus der Anschlussbuchse gezogen wird. Steckerhalterung kann ebenfalls von einem Vorrichtungsschlitten geführt oder lediglich von der Verbindungsplatte gehalten sein.

Die erfindungsgemässe Anschlussvorrichtung erlaubt bei einer Betätigung der verbundenen Deckeleinheit somit nicht nur das automatische Kontaktieren und Lösen des Anschlusssteckers, sondern stellt auch sicher, dass die Verbindung zwischen dem Anschlussstecker und der Anschlussbuchse der Batterie stets präzise und schonend erfolgt. Der Anschlussstecker, der vorzugsweise Führungselemente aufweist, richtet sich beim Anschlussvorgang daher automatisch präzise aus und gleitet unter ansteigenden Druck in die Anschlussbuchse hinein, ohne einzuhaken.

In vorzugsweisen Ausgestaltungen weist die Verbindungsplatte wenigstens eine Stangenöffnung auf, die je von einem Stangenschaft einer Verbindungsstange durchstossen wird, die vorzugsweise durch eine Gewindeverbindung in der Steckerhalterung verankert ist. Vorzugsweise sind mehrere Verbindungsstangen gleichmässig verteilt vorgesehen und in der Verbindungsplatte geführt. Der Stangenschaft jeder Verbindungsstange ist im Bereich zwischen der Verbindungsplatte und der Steckerhalterung vorzugsweise von einer Spiralfeder umschlossen, welche die Verbindungsplatte und die Steckerhalterung voneinander wegstösst. Auf der von der Steckerhalterung abgewandten Rückseite der Verbindungsplatte ist der Stangenschaft mit einem Stangenkopf versehen, der beim Öffnen der Deckeleinheit an der Rückseite der Verbindungsplatte anschlägt und von dieser gezogen wird. In der Folge sind die Verbindungsplatte und die Steckerhalterung durch die Verbindungsstangen formschlüssig miteinander gekoppelt, sodass die Steckerhalterung zwangsgeführt zusammen mit der Verbindungsplatte verschoben und der Anschlussstecker aus der Anschlussbuchse gezogen wird.

Vorzugsweise sind mehrere Stangenöffnungen vorgesehen, die von parallel zueinander ausgerichteten Verbindungsstangen durchstossen sind. Die Stangenöffnungen sind vorzugsweise gleichmässig verteilt, sodass die Einwirkung von Torsionskräften auf die Steckerhalterung vermieden wird. Die Steckerhalterung ist daher mittels der Verbindungsstangen vorzugsweise allein durch die Verbindungsplatte gehalten.

Die Verbindungsplatte ist vorzugsweise beidseitig je mit einem Verbindungsarm verbunden, sodass Zugkräfte beim Öffnen der Deckeleinheit und Druckkräfte beim Schliessen der Deckeleinheit gleichmässig auf die Verbindungsplatte einwirken und Drehmomente in Bezug auf die vertikal ausgerichtete Längsachse der Verbindungsplatte vermieden werden. Die Verbindungsplatte ist durch ein erstes Anschlussgelenk mit einem ersten Endstück eines des Verbindungsarms verbunden, dessen zweites Endstück durch ein zweites Anschlussgelenk mit der zugehörigen Deckeleinheit verbunden ist. Bei der Öffnung der zugehörigen Deckeleinheit können die Verbindungsarme daher in einer Ebene senkrecht zur Verschiebungsachse der Anschlussvorrichtung drehen. Aufgrund der formschlüssigen Verbindung des Vorrichtungsschlittens mit der Laufschiene kann die Anschlussvorrichtung sich hingegen nur entlang der Längsachse der Laufschiene verschieben.

Vorzugsweise weist jede der Deckeleinheiten individuell einen Deckelverschluss auf, sodass die Betätigung der Deckeleinheiten stets individuell erfolgen kann. Vorzugsweise werden abschliessbare Deckelverschlüsse vorgesehen, um sicherzustellen, dass nur berechtigte Personen Zugriff zu den Batterien haben.

Der Wechselrichter ist von der zentralen Steuereinheit mittels eines zentralen Steuerprogramms vorzugsweise derart steuerbar, dass eine von den Batterien an eine Gleichspannungsleitung angelegte Gleichspannung vom Wechselrichter bedarfsweise in eine Wechselspannung wandelbar ist, die an eine Wechselspannungsleitung angelegt wird, mit der der Verbraucher verbindbar ist.

Vorzugsweise ist der Wechselrichter von der zentralen Steuereinheit zudem derart steuerbar, dass eine vom Stromversorgungsnetz über eine Wechselspannungsleitung an den Wechselrichter angelegte Wechselspannung in eine Gleichspannung wandelbar ist, die an die Gleichspannungsleitung angelegt wird, die mit den Batterien verbunden oder verbindbar ist. Zu diesem Zweck wird der Wechselrichter mit der Netzspannung synchronisiert. Nach der Synchronisation ist gewährleistet, dass die positiven negativen Halbwellen z.B. über einen Transformator und eine Leistungsbrücke so an die Gleichspannungsleitung angelegt werden, dass ein Gleichstrom zum Aufladen zu den Batterien fliesst.

In einer weiteren bevorzugten Ausgestaltung ist der Wechselrichter mit der Wechselspannung des Stromversorgungsnetzes synchronisierbar, um dem Verbraucher gleichzeitig ein Wechselstrom vom Stromversorgungsnetz und ein Wechselstrom vom Wechselrichter, der die Gleichspannung der Batterien in eine Wechselspannung wandelt, zuzuführen. In diesem Betriebsmodus kann der Stromversorgungswagen z.B. das Anlaufen von Maschinen unterstützen, falls das Stromversorgungsnetz nicht genügend Leistung liefert.

Der Wechselrichter weist vorzugsweise eine Leistungsbrücke mit Halbleiterschaltern, typischerweise FETs, und eine Wechselrichter-Steuereinheit auf, mittels der die Halbleiterschalter mit Rechtecksignalen angesteuert werden, deren Pulsweite moduliert wird. Zur Abgabe von positiven und negativen Halbwellen der zu erzeugenden Wechselspannung werden die Halbleiterschalter der Brückenzweige entsprechend betätigt. Die von der Leistungsbrücke abgegebene Wechselspannung entspricht in der Amplitude maximal der Grösse der Gleichspannung und muss daher mittels eines Transformators noch auf die Höhe der Spannung des Stromversorgungsnetzes oder die Nennspannung der Verbraucher transformiert werden. Dabei können einphasige oder mehrphasige Wechselspannungen erzeugt werden. Für jede Phase wird eine Leistungsbrücke vorgesehen, die von der Wechselrichter-Steuereinheit phasenverschoben angesteuert wird.

Die zentrale Steuereinheit, die mit einem zentralen Steuerprogramm versehen ist, ist vorzugsweise dazu ausgelegt, den Zustand der eingesetzten Batterien zu überwachen. Ermittelte Zustandsdaten der Batterien werden vorzugsweise mit festgelegten Referenz- oder Grenzwerten verglichen. Der Betrieb der Batterien erfolgt daher vorzugsweise unter Berücksichtigung eines Protokolls, welches die Betriebsbedingungen der Batterien vorschreibt. Diese Betriebsbedingungen werden beispielsweise vom Hersteller der Batterien vorgegeben. Die berücksichtigten Zustandsdaten betreffen beispielsweise die Batteriespannung, den Batteriestrom oder die Temperatur der Batterie.

Vorzugsweise wird auch der von allen Batterien abgegebene Gesamtstrom gemessen und gegebenenfalls mit den Strömen der einzelnen Batterien verglichen. Die entsprechenden Grössen und deren Verlauf werden vorzugsweise während der Betriebsdauer für jede Batterie registriert. Beim Management der Batterien kann daher auch die Alterung der Batterien berücksichtigt werden.

Vorzugsweise werden Batterien mit einem integrierten Batteriemanagementsystem bzw. einer integrierten lokalen Steuereinheit, in der ein lokales Steuerprogramm implementiert ist, verwendet, die zur eigenständigen Überwachung des Batteriezustands und zur Ermittlung der genannten Statusdaten geeignet ist. Vorzugsweise werden Batterien eingesetzt, die sich selbsttätig überwachen und unzulässige Zustände ausschliessen und die zentrale Steuereinheit von entsprechenden Aufgaben entlasten, respektive eine weitere Betriebssicherheit bieten.

In einer bevorzugten Ausgestaltung ist die zentrale Steuereinheit drahtlos oder über einen Datenbus drahtgebunden mit den lokalen Steuereinheiten verbunden. Die zentrale Steuereinheit und die lokalen Steuereinheiten sind vorzugsweise ausgelegt, automatisch ein Netzwerk aufzubauen, über das Daten, insbesondere Messdaten, und Steuerbefehle zwischen der zentralen Steuereinheit und den lokalen Steuereinheiten und/oder direkt zwischen den lokalen Steuereinheiten austauschbar sind. Beispielsweise können die zentrale Steuereinheit und die lokalen Steuereinheiten ein ad hoc Netzwerk nach dem Bluetooth Protokoll aufbauen.

Vorzugsweise werden Anschlussstecker und Anschlussbuchsen verwendet, welche nicht nur Leistungskontakte, über die elektrische Energie zum Verbraucher übertragbar ist, sondern auch Datenkontakte aufweisen, über die Daten, wie Statusdaten oder Steuerdaten, übertragbar sind. Beim Schliessen der Deckeleinheiten werden somit nicht nur die Batterien an das elektrische System des Stromversorgungswagens angeschlossen. Gleichzeitig werden auch die lokalen Steuereinheiten an den Datenbus angeschlossen.

Durch den Anschluss an das Netzwerk oder den Datenbus erkennt die zentrale Steuereinheit das Einsetzen einer Batterie und kann das elektrische System entsprechend konfigurieren. Ebenso kann das Abkoppeln detektiert werden. Sofern keine Verbindung über einen Datenbus und keine Verbindung über ein drahtloses Netzwerk erfolgt, kann das Einsetzen einer Batterie z.B. auch mittels eines zusätzlichen Pilotkontaktes im Anschlussstecker oder eines Schalters detektiert werden, der von der Anschlussvorrichtung betätigt wird, sobald diese gegen die Batterie gefahren wird.

Jeder Batterie ist ein Batterieschalter zugeordnet, mittels dessen die Batterie mit der Gleichspannungsleitung verbindbar ist. Die Batterieschalter können von der zentralen Steuereinheit und/oder von den lokalen Steuereinheiten in den Batterien betätigt werden. Vorzugsweise ist in Protokollen der zentralen Steuereinheit und der lokalen Steuereinheiten die Betätigung der Batterieschalter geregelt. Sofern beispielsweise die lokalen Steuereinheiten einen unzulässigen Zustand der Batterien feststellen, können sie einen Steuerbefehl der zentralen Steuereinheit überschreiben. Falls hingegen die zentrale Steuereinheit einen unzulässigen Zustand im elektrischen System feststellt, kann diese die Aktivierung der Batterie verhindern.

Mittels der zentralen Steuereinheit und/oder mittels der lokalen Steuereinheiten sind die Batterieschalter daher individuell steuerbar, sodass die Batterien wahlweise einzeln oder gemeinsam mit der Gleichspannungsleitung verbindbar sind, falls dies das Protokoll erlaubt. Bei der Entnahme der ersten Batterie kann die zweite Batterie weiter eine Gleichspannung an den Wechselrichter abgeben. Nach dem erneuten Einsetzen der ersten Batterie, z.B. nachdem diese geladen oder ausgetauscht wurde, kann die zweite Batterie entnommen werden. Eine Gleichspannung wird nun von der ersten Batterie an den Wechselrichter abgegeben, weshalb der Stromversorgungswagen auch beim sequenziellen Wechseln der Batterien unterbruchsfrei betrieben werden kann. Die Batterien können daher sequenziell ausgetauscht werden, während der Stromversorgungswagen die Verbraucher weiter mit Energie beliefert.

Sofern der Stromversorgungswagen für zwei Gruppen eines Baustellenpersonals vorgesehen ist, so kann jede Gruppe geladene Batterien in der benötigten Menge zur Baustelle mitnehmen und diese bedarfsweise einsetzen. Jede Arbeitsgruppe kann daher selbst sicherstellen, dass für die Erledigung ihrer Arbeiten genügend Energie zur Verfügung steht.

Vom Zentralrechner wird vorzugsweise protokolliert, wie viel Energie von jeder Batterie bezogen wurde. Dazu weisen die Batterien vorzugsweise eine Identifikationsnummer auf, die von der zentralen Steuereinheit erfasst wird. Vorzugsweise sind mehrere Verbraucher an den Stromversorgungswagen anschliessbar, wobei vorzugsweise für jeden Verbraucher die abgegebene Energiemenge protokolliert wird.

Das Wiederaufladen der Batterien kann innerhalb des Stromversorgungswagens durch den Wechselrichter erfolgen, falls dieser an ein Stromversorgungsnetz anschliessbar ist. Alternativ können die Batterien auch aus dem Stromversorgungswagen entnommen und an externe Ladegeräte angeschlossen werden.

Das Chassis oder Tragestell des Stromversorgungswagens kann beliebig aufgebaut werden. Vorzugsweise umfasst das Chassis miteinander verbundene Längsprofile, Vertikalprofile und Querprofile, die Montageelemente zur Befestigung vorzugsweise zum formschlüssigen Halten von Montagegarnituren, Montageplatten, Stützplatten aufweisen. Die Profilteile, die vorzugsweise aus Leichtmetall oder einem rigiden Kunststoff bestehen, können durch die Montagegarnituren miteinander und mit den Stützplatten und Montageplatten verbunden werden. Vorrichtungsteile und elektrische Geräte können an den Stützplatten und Montageplatten oder auch direkt an den Profilteilen befestigt werden.

Durch entsprechende Anordnung der Profilteile werden die beiden Batteriekammern vorgesehen. Unterhalb der Batteriekammern wird vorzugsweise eine Schaltkammer vorgesehen, die der Aufnahme des Wechselrichters dient.

Das Chassis kann hingegen auch vorteilhaft durch Verschweissen passender Chassisteile gefertigt werden. Sofern beispielsweise Blechteile oder Kunststoffteile passend gefertigt werden, kann das Chassis mit reduzierten Dimensionen und mit reduziertem Gewicht gefertigt werden.

Der Stromversorgungswagen kann beliebig mit Rädern, Stützelementen, Transporthaken, Montagelaschen und gegebenenfalls einer Anhängerkupplung versehen werden. In einer vorzugsweisen Ausgestaltung weist der Stromversorgungswagen an der Rückseite zwei Räder und an der Frontseite zwei Stützelemente auf. An der Oberseite, vorzugsweise zwischen den Deckeleinheiten wird vorzugsweise ein Transporthaken mit dem Chassis verbunden, der es erlaubt, den Stromversorgungswagen mit einem Kran anzuheben und an einen beliebigen Standort zu transportieren.

In bevorzugten Ausgestaltungen ist das Chassis beidseits mit je zwei Halterungen verbunden, die paarweise je einen Tragholm verschiebbar und fixierbar halten. Die Tragholme, die auf beiden Seiten mit Traggriffen versehen sind, können axial verschoben und an beliebigen Positionen fixiert werden. Auf diese Weise kann der Stromversorgungswagen nach Wunsch der Anwender frontseitig, rückseitig oder beidseitig erfasst, verschoben oder angehoben werden.

Ausführungsbeispiele der vorliegenden Erfindung werden nachstehend anhand von Figuren näher erläutert. Es zeigen:
- Fig. 1a: einen erfindungsgemässen Stromversorgungswagen 1, der ein mit einer Verschalung 12 versehenes Chassis 10 mit zwei Batteriekammern 110A, 110B aufweist, die der Aufnahme von Batterien 2A, 2B dienen und die durch Deckeleinheiten 11A, 11B individuell abschliessbar sind;
- Fig. 1b: den Stromversorgungswagen 1 von Fig. 1a ohne die Verschalung 12 und ohne die Deckeleinheiten 11A, 11B mit zwei Batterien 2A, 2B, die in die Batteriekammern 110A, 110B eingesetzt sind;
- Fig. 1c: den Stromversorgungswagen 1 im Zustand von Fig. 1b nach Entnahme der zweiten Batterie 2B mit Blick auf die freigelegte Batteriekammer 100B;
- Fig. 2: den Stromversorgungswagen von Fig. 1a nach dem Öffnen der ersten Deckeleinheit 11A und der Entnahme der ersten Batterie 2A aus der ersten Batteriekammer 100A mit Blick auf einen Anschlussstecker 31 einer verschiebbar gelagerten ersten Anschlussvorrichtung 3A, die mit der ersten Deckeleinheit 11A gekoppelt und von dieser betätigt wird, um den Anschlussstecker 31 beim Öffnen zurückzuziehen und beim Schliessen nach vorn in eine Anschlussbuchse der eingesetzten ersten Batterie 2A zu verschieben;
- Fig. 3a: den Teil des Stromversorgungswagens 1 von Fig. 1a mit der ersten Batterie 2A und der ersten Anschlussvorrichtung 3A, die mit der in Längsrichtung in der Mitte aufgeschnittenen ersten Deckeleinheit 11A verbunden ist und mit dem Anschlussstecker 31, der nach vorn in die Steckerbuchse 21 der ersten Batterie 2A verschoben wurde;
- Fig. 3b: den Teil des Stromversorgungswagens 1 von Fig. 3a nach dem Vorgang der Öffnung der ersten Deckeleinheit 11A, bei dem die erste Anschlussvorrichtung 3A betätigt und der Anschlussstecker 31 von der Buchse 21 der ersten Batterie 2A gelöst wurde;
- Fig. 3c: die erste Anschlussvorrichtung 3A mit dem ersten Anschlussstecker 31 von Fig. 3b in grösserer Darstellung;
- Fig. 4: eine der Anschlussvorrichtungen 3A, 3B von Fig. 1b mit Blick auf Leistungskontakte 319 und Steuerkontakte 318 des Anschlusssteckers 31;
- Fig. 5: ein Batteriemodul 20 mit einer der Batterien 2A, 2B, die in einer Halterung 25 eingeschlossen ist, die frontseitig und rückseitig obere und untere Rahmenteile 251 aufweist, die durch vertikale und horizontale Verbindungsprofile 252, 253 miteinander verbunden sind; und

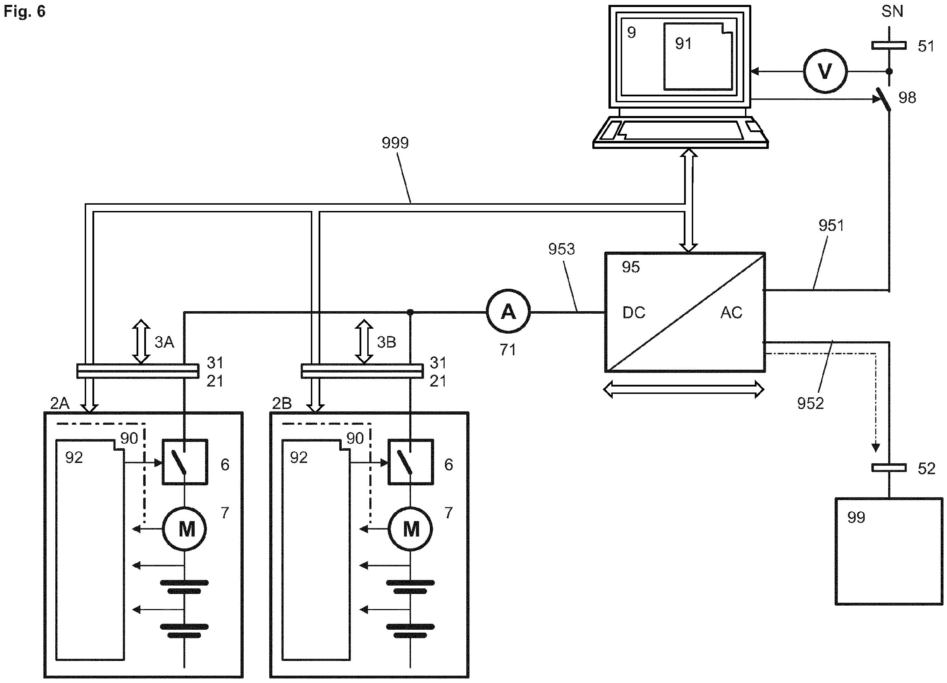

- Fig. 6: ein elektrisches Schaltbild der elektrischen Installation des Stromversorgungswagens 1 mit einer zentralen Steuereinheit 9, welche vorzugsweise zur Überwachung und Steuerung von einer oder zwei in den Stromversorgungswagen 1 eingesetzten Batterien 2A, 2B sowie eines Wechselrichters 95 vorgesehen ist, durch den in einer ersten Betriebsart die Gleichspannung der Batterien 2A, 2B in eine Wechselspannung wandelbar und an einen Verbraucher 90 abgebbar ist und in einer vorzugsweise einstellbaren zweiten Betriebsart eine von einem Stromversorgungsnetz SN zugeführte Wechselspannung in eine Gleichspannung wandelbar ist, mit der die Batterien 2A, 2B geladen werden.

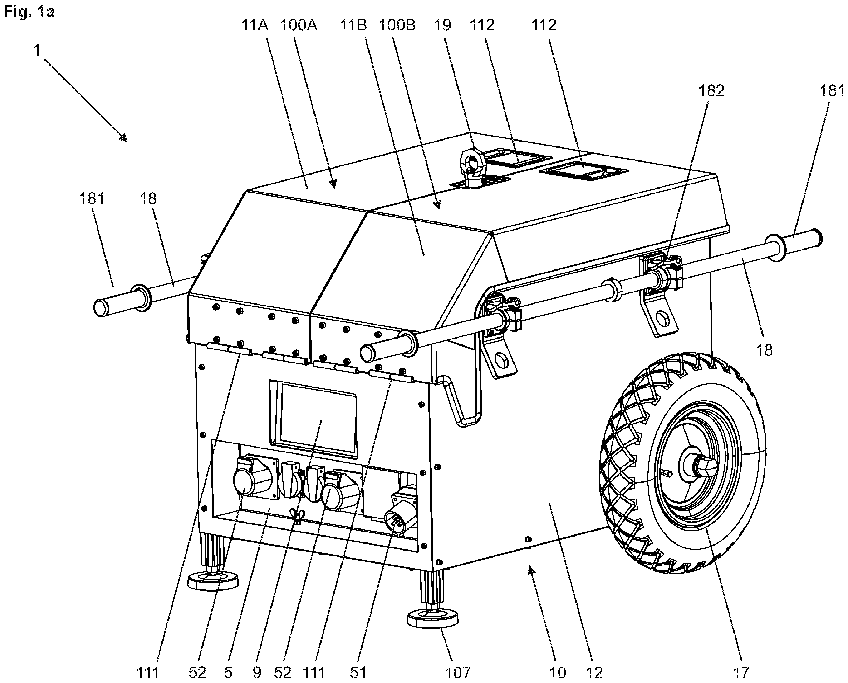

Fig. 1a zeigt einen erfindungsgemässen Stromversorgungswagen 1 mit einer Anschlussleiste 5 mit elektrischen Anschlüssen bzw. Steckverbindereinheiten 51, 52, Buchsen und Steckern, an die Anschlusskabel anschliessbar sind, mit denen der Stromversorgungswagen 1 wahlweise mit einem Stromnetz und/oder mit Verbrauchern bzw. elektrischen Lasten verbindbar ist. An den Stecker 51 ist beispielsweise ein Stromversorgungskabel anschliessbar, das mit dem Stromversorgungsnetz verbindbar ist. An die Buchse 52 ist ein mit einem Verbraucher verbundenes Verbindungskabel anschliessbar.

Zur Kontrolle und Steuerung des Stromversorgungswagens 1 ist vorzugsweise eine zentrale Steuereinheit 9 mit einer Benutzerschnittstelle, z.B. mit einem Touchscreen, einer Tastatur oder Schaltmitteln, vorgesehen. Durch die zentrale Steuereinheit 9 kann die Steuerung des Stromversorgungswagens 1 automatisch oder über die Benutzerschnittstelle erfolgen.

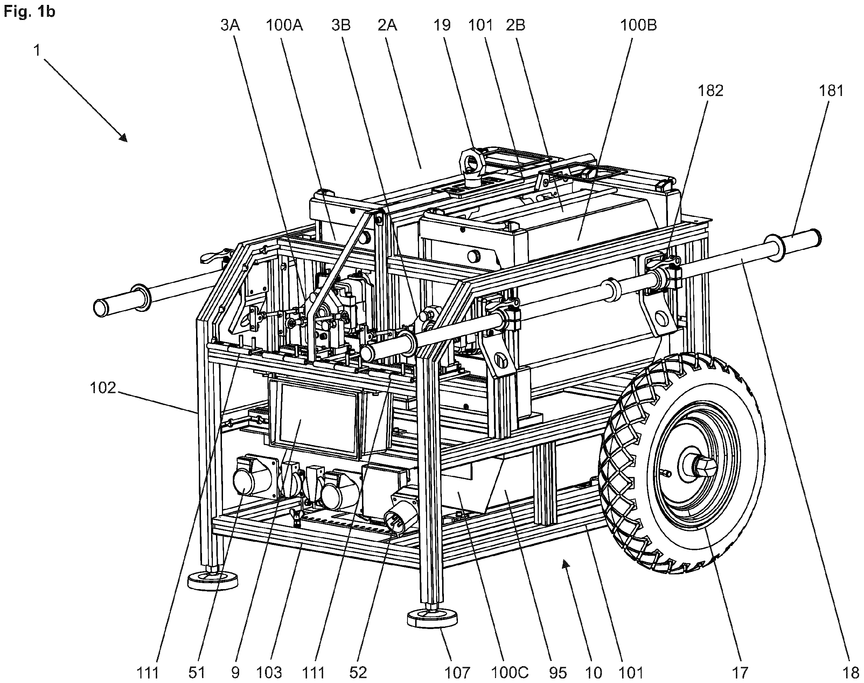

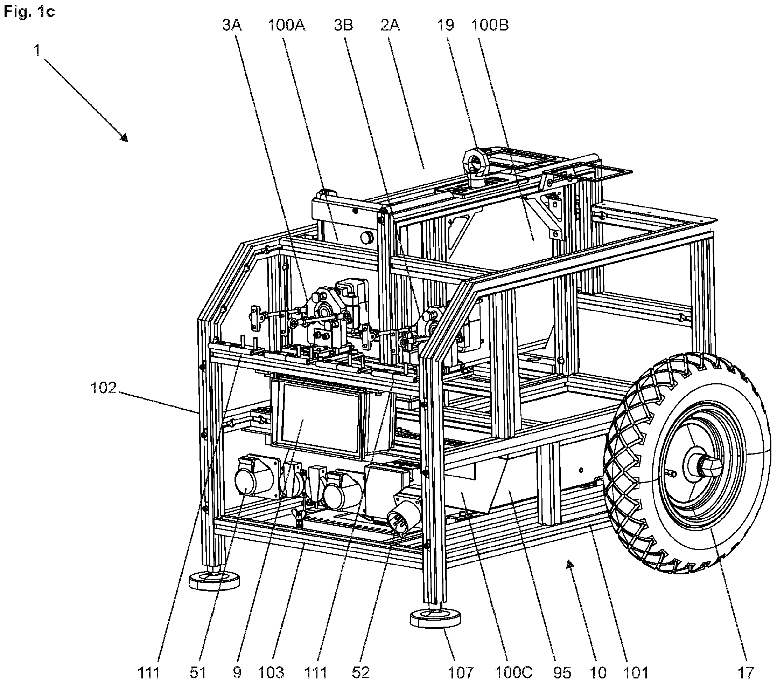

In der vorliegenden Ausgestaltung kann der Stromversorgungswagen 1 wahlweise mit zwei Batterien 2A, 2B (siehe Fig. 1b) oder nur mit einer Batterie 2A oder 2B (siehe Fig. 1c) ausgerüstet und betrieben werden. Die Batterien 2A, 2B, die in Batteriekammern 110A, 110B eingesetzt werden (siehe Fig. 1c), sind durch Anschlussvorrichtungen 3A, 3B mit Gleichspannungsanschlüssen eines Wechselrichters 95 und vorzugsweise mit der zentralen Steuereinheit 9 verbunden oder verbindbar.

Der Wechselrichter 95 ist mit seinen Wechselspannungsanschlüssen mit den Steckverbindereinheiten 51, 52 verbunden, denen Wechselspannungen zugeführt und/oder an denen Wechselspannungen abgenommen werden. Der Stromversorgungswagen 1 kann zur Abgabe und/oder Aufnahme von einphasigen Spannungen und/oder mehrphasigen Spannungen vorgesehen werden.

Vorzugsweise wird ein Wechselrichter 95 verwendet, der in einer ersten Betriebsart eine Wechselrichterfunktion und in einer zweiten Betriebsart eine Ladefunktion aufweist und der von der zentralen Steuereinheit 9 steuerbar ist, um die Gleichspannung der Batterien 2A, 2B in eine Wechselspannung zu wandeln oder um mit der Ladefunktion, nach Anschluss des Stromversorgungswagens 1 an ein Stromnetz, die Batterien 2A, 2B zu laden.

Der Stromversorgungswagen 1 weist ein Chassis 10 (siehe Fig. 1b) auf, das mit einer Verschalung 12 abgedeckt ist und das auf zwei Räder 17 und zwei Stützfüsse 107 abgestützt und entsprechend verfahrbar und parkierbar ist. An der Oberseite ist eine Tragöse 19 mit dem Chassis 10 verbunden, an dem der Stromversorgungswagen 1 von einem Kran erfasst und angehoben werden kann.

Auf einander gegenüberliegenden Seiten des Stromversorgungswagens 1 ist oberhalb der Räder 17 je ein Tragholm 18 mit dem Chassis 10 verbunden. Jeder Tragholm 18 weist an beiden Enden eine Traggriff 181 auf und ist von zwei Verbindungsvorrichtungen 182 verschiebbar und fixierbar gehalten. In der gezeigten Darstellung befinden sich die Tragholmen 18 etwa in der Mitte, sodass das Gewicht des Stromversorgungswagens 1 gleichmässig auf vier Personen verteilt wird, die je einen Traggriff 181 halten und den Stromversorgungswagen 1 anheben. Die Tragholmen 18 können auch nach vorn oder zurück verschoben werden, sodass sie von einer Person an der Frontseite oder Rückseite des Stromversorgungswagens 1 erfasst werden können, um den Stromversorgungswagen 1 zu verschieben.

Fig. 1 zeigt weiterhin, dass der Stromversorgungswagen 1 durch zwei Deckeleinheiten 11A, 11B abgedeckt ist, die durch Scharniere 111 getrennt voneinander mit dem Chassis 10 bzw. einem Querprofil 103 des Chassis 10 verbunden sind und denen je ein Deckelverschluss 112 zugeordnet ist. Durch Lösen des zugeordneten Deckelverschlusses 112 kann jede der Deckeleinheiten 11A, 11B individuell gelöst und die zugehörige Batteriekammer 100A, 100B geöffnet werden, sodass eine Batterie 2A, 2B in die betreffende Batteriekammer 100A, 100B eingesetzt oder daraus entnommen werden kann.

Fig. 1b zeigt den Stromversorgungswagen 1 von Fig. 1a mit dem Chassis 10 ohne die Verschalung 12 und die Deckeleinheiten 11A, 11B und mit zwei Batterien 2A, 2B, die in die Batteriekammern 110A, 110B eingesetzt sind.

Es ist ersichtlich, dass das Chassis 10 durch Profilteile gleichen Querschnitts aufgebaut ist und Längsprofile 101, Vertikalprofile 102 und Querprofile 103 aufweist. Die beiden Batteriekammern 110A, 110B werden durch entsprechende Profilteile 101, 102, 103 begrenzt. An einem zwischen den Batteriekammern 110A, 110B verlaufenden Längsprofil 101 ist die Tragöse 19 befestigt. Unterhalb der beiden Batteriekammern 110A, 110B begrenzen die Profilteile 101, 102, 103 eine Schaltkammer 100C der Wechselrichter 95 angeordnet ist. Frontseitig ist oberhalb der Schaltkammer 100C ein Raum für die zentrale Steuereinheit 9 und für eine erste und eine zweite Anschlussvorrichtung 3A, 3B vorgesehen, die den beiden Batteriekammern 110A, 110B zugeordnet sind und die der elektrischen Ankopplung der darin eingesetzten Batterien 2A, 2B dienen.

Fig. 1c zeigt den Stromversorgungswagen 1 im Zustand von Fig. 1b nach Entnahme der zweiten Batterie 2B mit Blick auf die freigelegte zweite Batteriekammer 100B.

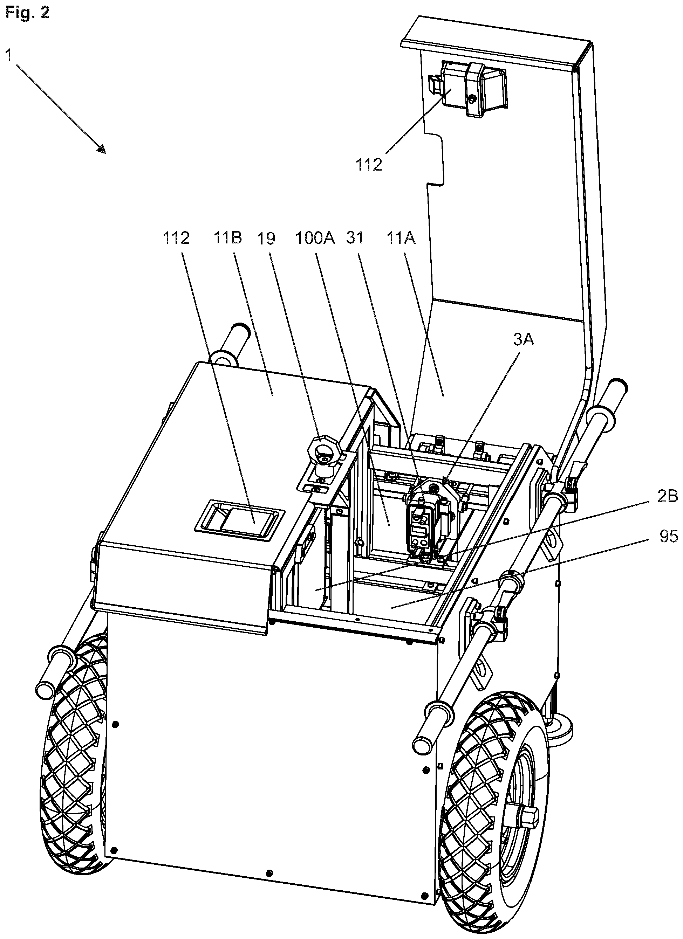

Fig. 2 zeigt den Stromversorgungswagen von Fig. 1a nach dem Öffnen der ersten Deckeleinheit 11A und der Entnahme der ersten Batterie 2A aus der ersten Batteriekammer 100A mit Blick auf den Anschlussstecker 31 einer ersten Anschlussvorrichtung 3A, die verschiebbar gelagert ist und beim Öffnen der Deckeleinheit 11A zurückgezogen wurde, wodurch sich der Anschlussstecker 31 von einer Anschlussbuchse 21 der Batterie 2A löste.

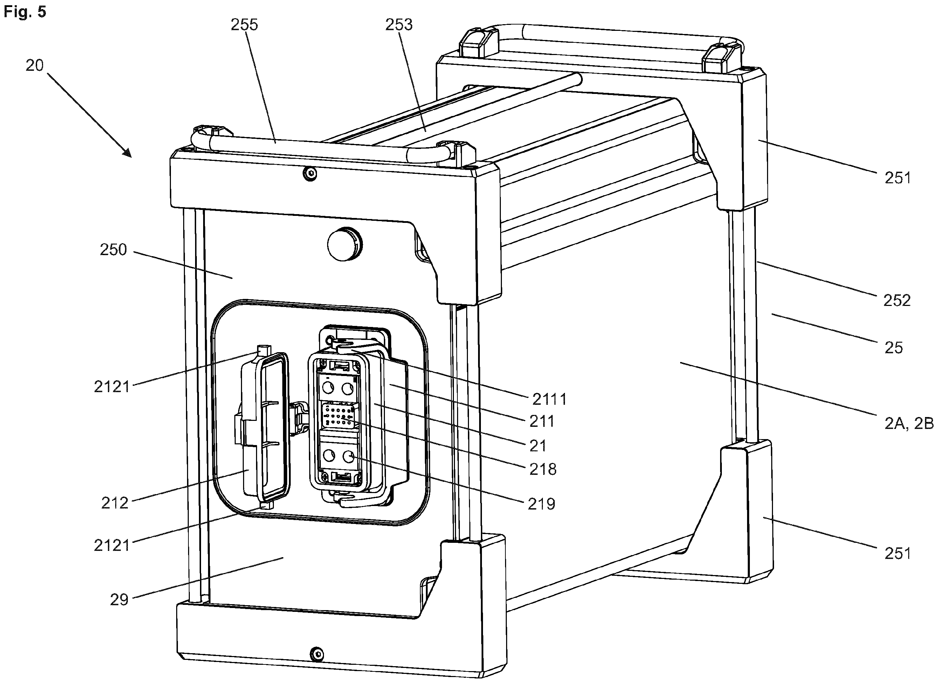

Vorzugsweise werden Batterien 2A, 2B nicht wie vom Hersteller geliefert, sondern eingeschlossen in eine Batteriehalterung 25 in die zugehörige Batteriekammer 100A, 100B eingesetzt. Ein Batteriemodul 20 mit einer Batterie 2A, 2B ist in Fig. 5 gezeigt.

Die Anschlussvorrichtung 3A ist mit der ersten Deckeleinheit 11A gekoppelt und wird von diesem beim Öffnen zurückgezogen, um den Anschlussstecker 31 zu lösen, und beim Schliessen nach vorne geschoben, um den Anschlussstecker 31 in die Anschlussbuchse 21 der Batterie 2A einzuschieben.

In der in Fig. 2 gezeigten Konfiguration kann der Stromversorgungswagen 1 nach Entnahme der ersten Batterie 2A den oder die Verbraucher noch immer mit Strom versorgen. Nach der Entnahme der ersten Batterie 2A bleibt die zweite Batterie 2B noch immer mit den Wechselrichter 95 verbunden, der die Gleichspannung der zweiten Batterie 2B in eine Wechselspannung wandelt.

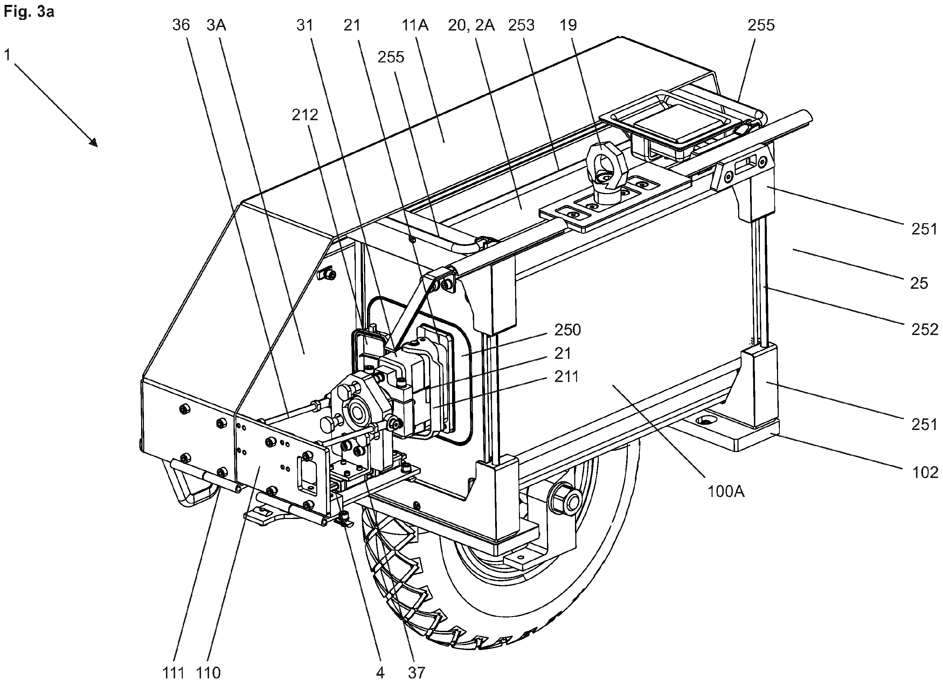

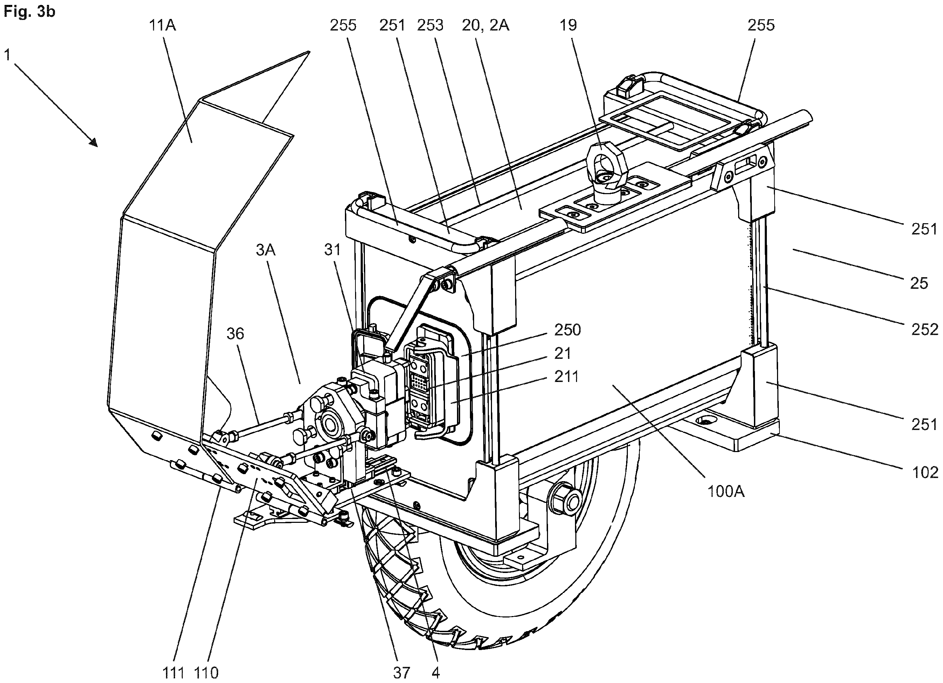

Die Figuren 3a und 3b zeigen den Teil des Stromversorgungswagens 1 von Fig. 1a mit der ersten Batterie 2A und der ersten Anschlussvorrichtung 3A und illustrieren den Vorgang der Entkopplung oder Ankopplung der ersten Batterie 2A an das elektrische System des Stromversorgungswagens 1. Die zugehörige Deckeleinheit 11A ist entlang ihrer Längsachse geschnitten, sodass die Anschlussvorrichtung 3A und der damit gehaltene Anschlussstecker 31 sowie die Batterie 2A mit deren Anschlussbuchse 21 gut sichtbar sind. Es ist gezeigt, dass die Deckeleinheit 11A mit einer Verbindungsplatte 110 verschraubt ist, die einerseits durch die Scharniere 111 mit dem Chassis 10 und andererseits durch Verbindungsarme 36 gelenkig mit der zugehörigen ersten Anschlussvorrichtung 35A verbunden ist. Die Anschlussvorrichtung 35A umfasst einen einteiligen oder mehrteiligen Schlitten 37, der beim Öffnen und Schliessen der Deckeleinheit 11A entlang einer Schiene 4 axial verschoben wird.

In Fig. 3a ist die Deckeleinheit 11A geschlossen, weshalb die Anschlussvorrichtung 3A mit dem Anschlussstecker 31 nach vorn in eine Position gefahren wurde, in der der Anschlussstecker 31 mit der Anschlussbuchse 21 der Batterie 2A gekoppelt ist. Ein Verschlussdeckel 212 der Anschlussbuchse 21 wurde zur Seite gedreht, damit die Anschlussbuchse 21 frei liegt. Eine Verschlussklappe 211 wurde gegen den Anschlussstecker 31 gedreht, um diese zu fixieren. Da der Anschlussstecker 31 hingegen von der Anschlussvorrichtung 3A in Position gehalten wird, kann auf die Verschlusskappe 211 verzichtet werden.

Fig. 3b zeigt den Teil des Stromversorgungswagens 1 von Fig. 3a nach dem Vorgang der Öffnung der ersten Deckeleinheit 11A, bei dem die erste Anschlussvorrichtung 3A zurückgezogen und der Anschlussstecker 31 automatisch von der Buchse 21 der ersten Batterie 2A gelöst wurde. Wird die Deckeleinheit 11A wieder geschlossen, so wird wieder die Konfiguration von Fig. 3a erreicht, in der der Anschlussstecker 31 mit der Anschlussbuchse 21 verbunden ist.

Obwohl die Begriffe »Anschlussstecker« und »Anschlussbuchse« verwendet werden, können diese beiden Steckverbindereinheiten sowohl Steckerelemente als auch Buchsenelemente aufweisen. Ferner können die Steckverbindereinheiten Leistungskontakte und Steuerkontakte oder Datenkontakte aufweisen.

Die Figuren 3a und 3b zeigen ferner, dass die Batterie 2A in eine Batteriehalterung 25 eingeschlossen ist, die frontseitig und rückseitig, obere und untere Rahmenteile 251 umfasst, die durch vertikale Verbindungsprofile 252 und horizontale Verbindungsprofile 253 miteinander verbunden sind. An der Frontseite weist die Batteriehalterung 25 eine Aussparung 250 auf, durch die die Anschlussbuchse 21 freigehalten ist. Zusammen mit der Halterung 25 bilden die Batterien 2A, 2B je ein Batteriemodul 20. Die oberen Rahmenteile 251 sind mit Traggriffen 255 versehen, mittels denen das Batteriemodul 20 erfasst und aus der Batteriekammer 100A angehoben und weggetragen werden kann. Die Batterien 2A, 2B können daher in einfacher Weise manipuliert werden.

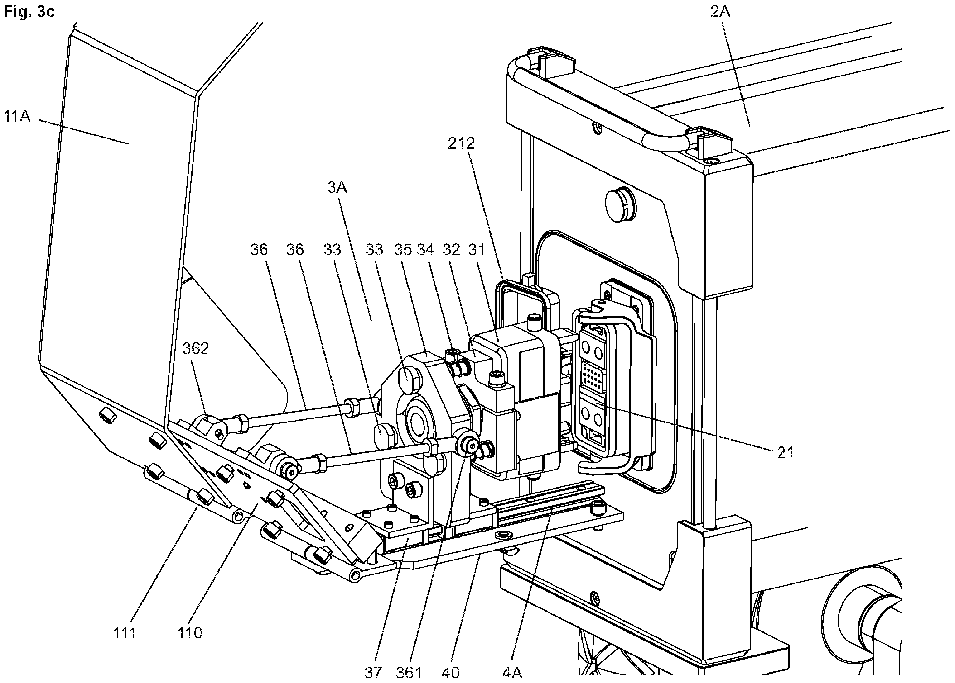

Fig. 3c zeigt die erste Anschlussvorrichtung 3A von Fig. 3b mit dem von der Anschlussbuchse 21 gelösten Anschlussstecker 31 in grösserer Darstellung. Der Anschlussstecker 31 ist von einer Halterung 32 gehalten, die durch drei Verbindungsstangen 33 mit einer Verbindungsplatte 35 verschiebbar gehalten ist. Die Verbindungsplatte 35 ist durch erste Anschlussgelenke 361 beidseits mit den Verbindungsarmen 36 verbunden, die durch zweite Anschlussgelenke 362 mit der Verbindungsplatte 110 der Deckeleinheit 11A verbunden sind. Die Verbindungsplatte 35 ist durch Winkelelemente frontseitig und rückseitig je mit einem Teil eines Schlitten 37 verbunden, der formschlüssig von einer Laufschiene 4A gehalten ist und sich daher nur entlang der Laufschiene 4A bewegen kann. Die Laufschiene 4A ist auf eine Montageplatte 40 aufgesetzt, die mit dem Chassis 10 verschraubt ist.

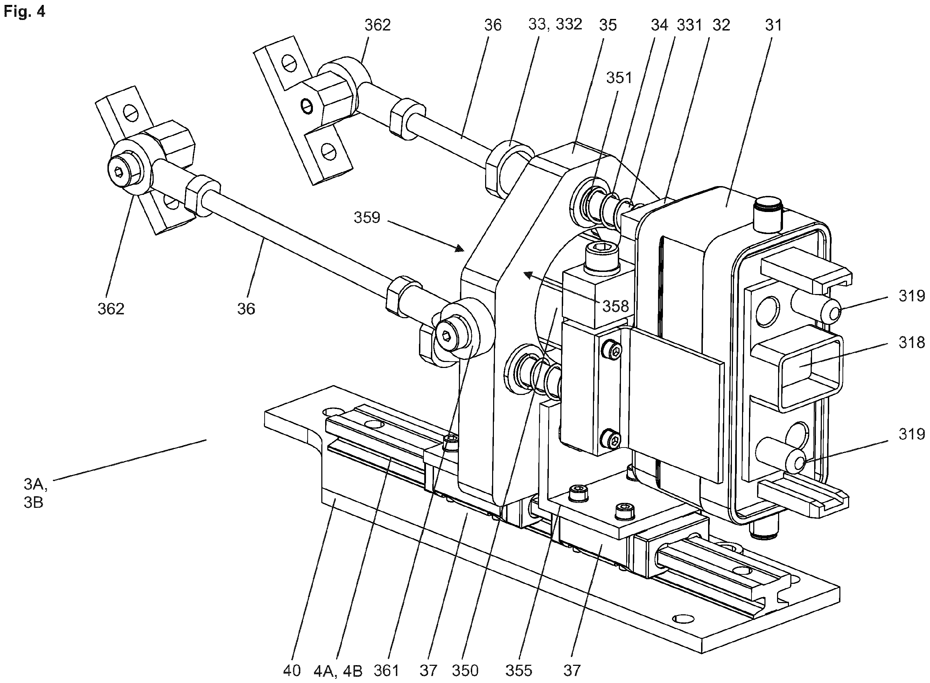

Fig. 4 zeigt eine der Anschlussvorrichtungen 3A, 3B von Fig. 1b mit Blick auf die Frontseite des Anschlusssteckers 31. Es ist gezeigt, dass die Verbindungsstangen 33 einen Stangenschaft 331 und einen Stangenkopf 332 aufweisen. Jeder Stangenschaft 331 ist durch eine Stangenöffnung 351 der Verbindungsplatte 35 hindurchgeführt und kann innerhalb der Stangenöffnung 351 verschoben werden. Weiterhin ist jeder Stangenschaft 331 zwischen der Steckerhalterung 32 und der Verbindungsplatte 35 von einer Schraubenfeder 34 umschlossen, die mit einem Endstück an der Frontseite 358 der Verbindungsplatte 35 und mit dem anderen Endstück an der Rückseite der Steckerhalterung 32 anliegt.

Die Steckerhalterung 32 kann daher gegen die Federkraft der Schraubenfedern 34 in eine Richtung gegen die Verbindungsplatte 35 verschoben werden. In die andere Richtung kann die Steckerhalterung 32 soweit verschoben werden, bis die Köpfe 332 der Verbindungsstangen 33 an der Rückseite der Verbindungsplatte 35 anschlagen. Diese elastische Ankopplung des Anschlusssteckers 31 an die Anschlussvorrichtung 3A gewährleistet beim Schliessen der zugehörigen Deckeleinheit 11A, 11B ein vorteilhaftes Ankoppeln des Anschlusssteckers 31 an die Anschlussbuchse 21. Bei minimalen Fehlausrichtungen des Anschlusssteckers 31 kann sich dieser zentrieren, bevor er kraftvoll in die Anschlussbuchse 21 eingeschoben wird.

Die Verbindungsplatte 35 ist an der Frontseite 358 und an der Rückseite 359 je durch ein Winkelteil 355 mit einem Teil des zweiteiligen Vorrichtungsschlittens 37 verbunden. Drehmomente, die beim Öffnen und Schliessen der zugehörigen Deckeleinheit 11A, 11B auf die Verbindungsplatte 35 einwirken, können daher sicher aufgefangen werden. Eine Neigung der Verbindungsplatte 35 und somit eine Fehlausrichtungen des Anschlusssteckers 31 können somit vermieden werden. Die Teile des Vorrichtungsschlittens 37 weisen eine Profilöffnung auf und umklammern formschlüssig ein T-Profil der Laufschiene 4A, 4B.

Fig. 4 zeigt weiter, dass der Anschlussstecker 31 Leistungskontakte 319 und Datenkontakte und/oder Steuerungskontakte 318 aufweist. Die Leistungskontakte 319 verbinden die Batterieanschlüsse der zugeschalteten Batterie 2A, 2B mit dem Wechselrichter 95. Die Steuerkontakte 318 verbinden eine lokale Steuereinheit 90 der zugeschalteten Batterie 2A, 2B mit der zentralen Steuereinheit 9 (siehe Fig. 6). Ein mit dem Anschlussstecker 31 verbundenes Anschlusskabel kann durch eine Kabelöffnung 350, die in der Verbindungsplatte 35 vorgesehen ist, weggeführt werden.

Fig. 5 zeigt ein Batteriemodul 20 mit einer der Batterien 2A, 2B, die in einer Halterung 25 eingeschlossen ist, die frontseitig und rückseitig obere und untere Rahmenteile 251 aufweist, die durch vertikale und horizontale Verbindungsprofile 252, 253 miteinander verbunden sind. Die Batteriehalterung 25 erfüllt dabei zwei Funktionen. Einerseits erlaubt die Batteriehalterung 25 das einfache Erfassen und Manipulieren der Batterie 2A, 2B. Andererseits ist die Batteriehalterung 25 mit den Rahmenteilen 251 an die Innenabmessungen der Batteriekammern 100A, 100B angepasst, sodass die Batteriemodule 20 leicht in die Batteriekammern 100A, 100B eingesetzt werden können. Die vorzugsweise aus einem Kunststoff, wie POM (Polyoxymethylene), gefertigten Rahmenteile 251 bilden dabei eine Art Schlittenkufen, die leicht in die Batteriekammern 100A, 100B hineingleiten können.

Fig. 6 zeigt schematisch ein elektrisches Schaltbild der elektrischen Installation des Stromversorgungswagens 1 mit einer zentralen Steuereinheit 9, welche über einen Datenbus 999 eine oder zwei in den Stromversorgungswagen 1 eingesetzte Batterien 2A, 2B sowie einen Wechselrichter 95 steuert.

Der Wechselrichter 95 ist auf der Wechselspannungsseite mit einer ersten Wechselspannungsleitung 951 über einen Netzschalter 98 und einen Kabelanschluss oder Netzanschlussstecker 51 mit einem Stromnetz SN verbindbar. Weiterhin ist der Wechselrichter 95 auf der Wechselspannungsseite über eine zweite Wechselspannungsleitung 952 und einen Kabelanschluss oder eine Lastanschlussbuchse 52 mit einem elektrischen Verbraucher 99 verbindbar.

Auf der Gleichspannungsseite ist der Wechselrichter 95 über eine Gleichspannungsleitung 953 und die Anschlussstecker 31 mit den Gleichspannungsanschlüssen oder Leistungsanschlüssen der eingesetzten Batterien 2A, 2B verbunden.

Mit Doppelpfeilen ist schematisch gezeigt, dass die Anschlussstecker 31 mittels der Anschlussvorrichtungen 3A und 3B in die Anschlussbuchsen 21 der Batterien 2A, 2B eingefügt wurden. Mit den Anschlusssteckern 31 wurde auch der Datenbus 999 an lokale Steuereinheiten 90 innerhalb der Batterien 2A, 2B angeschlossen.

In der zentralen Steuereinheit 9 ist ein zentrales Steuerprogramm 91 implementiert, mittels dessen der Betrieb des Wechselrichters 95 und eine eingesetzte Batterie 2A; 2B oder zwei eingesetzte Batterien 2A, 2B überwacht und gesteuert werden können. Insbesondere können Batterieschalter 6 gesteuert werden, die innerhalb oder ausserhalb der Batterien 2A, 2B in der Gleichspannungsleitung 953 vorgesehen sind. Weiterhin kann der Netzschalter 98 gesteuert werden.

Vorzugsweise kann die zentrale Steuereinheit 9 alle wesentlichen Parameter des elektrischen Systems, wie die Batteriespannungen, die Batterieströme, die Eingangsspannungen und Ausgangsspannungen des Wechselrichters 95, gegebenenfalls die Eingangsströme und Ausgangsströme des Wechselrichters 95 sowie die Temperaturen vorzugsweise aller elektrischen Elemente messen. Vorzugsweise kann auch die am Netzschalter 98 anliegende Netzspannung gemessen werden. Das zentrale Steuerprogramm 91 ist vorzugsweise ausgelegt, das elektrische System derart zu steuern, dass dieses die gewünschten Funktionen erfüllt und Fehlfunktionen vermieden werden.

Sofern lokale Steuereinheiten 90 mit lokalen Steuerprogrammen 92 innerhalb der Batterien 2A, 2B vorgesehen sind, so wird vorzugsweise automatisch ein lokales Netzwerk zwischen der zentralen Steuereinheit 9 und den lokale Steuereinheiten 90 aufgebaut. Über das Netzwerk erkennt die zentrale Steuereinheit 9 automatisch das Einsetzen oder die Entnahme der Batterien 2A, 2B und kann das elektrische System und dessen Parameter entsprechend konfigurieren und steuern.

Die lokalen Steuereinheiten 90 überwachen vorzugsweise die zugeordnete Batterie 2A oder 2B und messen mit Messgeräten 7 alle relevanten Grössen, wie die Temperatur, den Batteriestrom, die Batteriespannung oder Spannungen der Batteriezellen. Die lokalen Steuereinheiten 90 können vorzugsweise auch die Batterieschalter 6 betätigen.

Die zentrale Steuereinheit 9 und/oder die lokalen Steuereinheiten 90 messen beispielsweise die Batteriespannungen und entscheiden anhand eines vorgegebenen Protokolls, ob nur eine oder beide Batterien 2A, 2B, die in die Batteriekammern 100A, 100B eingesetzt wurden, an die Gleichspannungsleitung 953 angeschlossen werden. Sofern die Batteriespannungen unterschiedlich sind und die Differenz der Batteriespannungen einen bestimmten Wert von z.B. 2-3 Volt überschreitet, wird vorzugsweise entschieden, nur die Batterie 2A, 2B mit der grösseren Batteriespannung an die Gleichspannungsleitung 953 zu schalten. Sofern die Temperatur einer der Batterien 2A, 2B einen vorgegebenen Maximalwert überschreitet, kann diese Batterie 2A, 2B ebenfalls abgeschaltet werden. Die zentrale Steuereinheit 9 kann ferner mit einem Amperemeter den Strom in der Gleichspannungsleitung 953 überwachen.

Die Batterien 2A, 2B, die wiederaufladbar sind, geben eine Gleichspannung ab, die vorzugsweise möglichst hoch, für Personen aber nicht gefährdend ist. Vorzugsweise wird eine Gleichspannung von 48 V abgegeben.

Die primäre Funktion des Wechselrichters 95 ist die Umwandlung der von den Batterien 2A und/oder 2B abgegebenen Gleichspannung in eine einphasige oder mehrphasige Wechselspannung, die über die zweite Wechselspannungsleitung 952 an den Verbraucher 99 abgegeben wird. Vorzugsweise wird ein Wechselrichter 95 verwendet, der in einer ersten Betriebsart eine Wechselrichterfunktion und in einer zweiten Betriebsart eine Ladefunktion aufweist und der von der zentralen Steuereinheit 9 steuerbar ist. Batterien 2A, 2B können hingegen entnommen und an ein externes Ladegerät angeschlossen werden.

In vorzugsweisen Ausgestaltungen kann der Wechselrichter 95 die von ihm erzeugte Wechselspannung auch mit der Wechselspannung des Stromversorgungsnetzes SN synchronisieren, sodass die erste und zweite Wechselspannungsleitung 951, 952 zusammengeschaltet werden können, um den Verbraucher 99 mit Energie aus dem Stromversorgungsnetz SN und mit Energie der Batterien 2A und/oder 2B zu versorgen.

### Bezugszeichenliste

- 1: Stromversorgungswagen
- 10: Chassis
- 100A, 100B: erste und zweite Batteriekammer
- 100C 101: Längsprofile
- 102: Vertikalprofile
- 103: Querprofile
- 11A, 11B: erste und zweite Deckeleinheit
- 107: Stützfüsse
- 108: Stützelemente, Montageplatten
- 110: Verbindungsplatte
- 111: Deckelscharniere
- 112: Deckelverschluss
- 12: Verschalung
- 17: Räder
- 18: Tragholmen
- 181: Holmengriffe
- 182: Holmhalterungen
- 19: Tragöse
- 182: Verbindungsvorrichtungen
- 2A, 2B: erste und zweite Batterie / Akkumulator
- 20: Batteriemodul
- 21: Anschlussbuchse
- 211: Verschlussklappe
- 2111: Verschlussgabel
- 212: Verschlussdeckel
- 2121: Verschlussnocken
- 218: Datenkontakte
- 219: Leistungskontakte
- 25: Batteriehalterung
- 250: Aussparung
- 251: Rahmenteile
- 252: vertikale Verbindungsprofile
- 253: horizontale Verbindungsprofile
- 255: Traggriffe der Batteriehalterung
- 29: Anschlussseite der Batterien
- 3A, 3B: erste und zweite Anschlussvorrichtung
- 31: Anschlussstecker
- 311: Haltenocken
- 318: Datenkontakte
- 319: Leistungskontakte
- 32: Steckerhalterung
- 33: Verbindungsstangen
- 331: Stangenschaft
- 332: Stangenkopf
- 34: Federelemente
- 35: Verbindungsplatte
- 350: Kabelöffnung
- 351: Stangenöffnungen
- 358: Frontseite der Verbindungsplatte
- 359: Rückseite der Verbindungsplatte
- 36: Verbindungsarme
- 361: des Anschlussgelenk
- 362: zweites Anschlussgelenk
- 37: Vorrichtungsschlitten
- 4: Laufschiene
- 40: Montageplatte
- 5: Anschlussleiste
- 51: Netzanschlussstecker
- 52: Lastanschlussbuchse
- 6: Batterieschalter
- 7: Batteriemessgerät
- 9: zentrale Steuereinheit
- 90: lokale Steuereinheiten
- 91: zentrales Steuerprogramm
- 92: lokale Steuerprogramme
- 95: Wechselrichter vorzugsweise mit Ladefunktion
- 951: erste Wechselspannungsleitung
- 952: zweite Wechselspannungsleitung
- 953: Gleichspannungsleitung
- 98: Netzschalter
- 99: Verbraucher
- 999: Datenbus

## Patentansprüche

1. Stromversorgungswagen (1) mit einem Chassis (10), das wenigstens zwei Batteriekammern (110A, 110B) aufweist, in die je eine Batterie (2A; 2B) eingesetzt oder einsetzbar ist, die an einen Wechselrichter (95) anschliessbar ist, über den elektrische Energie von den Batterien (2A, 2B) zu wenigstens einem Verbraucher (99) übertragbar ist, und mit einer Steuereinheit (9), mittels der der Betrieb des Stromversorgungswagens (1) steuerbar ist, **dadurch gekennzeichnet, dass** jeder Batteriekammer (110A, 110B) eine Deckeleinheit (11A, 11B) zugeordnet ist, die durch wenigstens ein Deckelscharnier (111) drehbar mit dem Chassis (10) verbunden ist und die durch wenigstens einen Verbindungsarm (36) gelenkig mit einer zugeordneten Anschlussvorrichtung (3A; 3B) verbunden ist, die entlang einer zugehörigen Laufschiene (4A; 4B) verschiebbar gelagert ist und die einen Anschlussstecker (31) hält, der achsparallel zu einer Anschlussbuchse (21) der zugehörigen Batterie (2A, 2B) ausgerichtet beim Schliessen der zugehörigen Deckeleinheit (11A, 11B) gegen die Anschlussbuchse (21) verschiebbar und beim Öffnen der zugehörigen Deckeleinheit (11A, 11B) von der Anschlussbuchse (21) lösbar ist.

2. Stromversorgungswagen (1) nach Anspruch 1, **dadurch gekennzeichnet, dass** jede der Batterien (2A; 2B) in einer ersten Richtung vorzugsweise vertikal in die zugehörige Batteriekammer (110A; 110B) einsetzbar ist und dass die zugehörige Anschlussvorrichtung (35A; 35B) in einer zweiten Richtung senkrecht zur ersten Richtung gegen eine Anschlussseite (29) der zugehörigen Batterie (2A; 2B) verschiebbar ist.

3. Stromversorgungswagen (1) nach Anspruch 1 oder 2, **dadurch gekennzeichnet, dass** jede der Batterien (2A; 2B) innerhalb einer Batteriehalterung (25) gehalten ist, die in ihren Abmessungen an die Abmessungen der Batteriekammern (110A; 110B) angepasst ist, die mit wenigstens einem Haltegriff (255) versehen ist und die eine Aussparung (250) aufweist, welche den Zugang zur Anschlussbuchse (21) der Batterie (2A; 2B) gewährleistet.

4. Stromversorgungswagen (1) nach Anspruch 1, 2 oder 3, **dadurch gekennzeichnet, dass** jede der Anschlussvorrichtungen (35A; 35B) eine Verbindungsplatte (35) aufweist,
a) die von einem einteiligen oder mehrteiligen Vorrichtungsschlitten (37) gehalten ist, der formschlüssig von der zugehörigen Laufschiene (4A; 4B) gehalten und entlang dieser verschiebbar ist, und
b) die durch den wenigstens einen Verbindungsarm (36) gelenkig mit der zugehörigen Deckeleinheit (11A; 11B) verbunden ist, und
c) die mit einer Steckerhalterung (32), von der der Anschlussstecker 31 gehalten ist, fest oder gegenüber dieser verschiebbar verbunden ist.

5. Stromversorgungswagen (1) nach Anspruch 4, **dadurch gekennzeichnet, dass** die Verbindungsplatte (35), die gegenüber der Steckerhalterung (32) verschiebbar gehalten ist, wenigstens eine Stangenöffnung (351) aufweist, die von einem Stangenschaft (331) der wenigstens einen Verbindungsstange (33) durchstossen ist,
a) der vorzugsweise durch eine Gewindeverbindung in der Steckerhalterung (32) verankert ist, und
b) der im Bereich zwischen der Verbindungsplatte (35) und der Steckerhalterung (32) von einer Spiralfeder (34) umschlossen ist, und
c) der auf der von der Steckerhalterung (32) abgewandten Rückseite (359) der Verbindungsplatte (35) mit einem Stangenkopf (332) versehen ist, der beim Öffnen der zugehörigen Deckeleinheit (11A; 11B) an der Rückseite (359) der Verbindungsplatte (35) anliegt und von dieser gezogen wird.

6. Stromversorgungswagen (1) nach Anspruch 4 oder 5, **dadurch gekennzeichnet, dass** die Verbindungsplatte (35) beidseitig durch ein erstes Anschlussgelenk (361) je mit einem Verbindungsarm (36) verbunden ist, der durch ein zweites Anschlussgelenk (362) mit der zugehörigen Deckeleinheit (11A; 11B) verbunden ist.

7. Stromversorgungswagen (1) nach einem der Ansprüche 1 - 6, **dadurch gekennzeichnet, dass** jede Deckeleinheit (11A; 11B) einen separaten Deckelverschluss (112) aufweist.

8. Stromversorgungswagen (1) nach einem der Ansprüche 1 - 7, **dadurch gekennzeichnet, dass** das Chassis (10) miteinander verbundene Längsprofile (101), Vertikalprofile (102) und Querprofile (103) aufweist, die Montageelemente zur Befestigung von Montageplatten (40), Stützplatten (108) und Montagegarnituren aufweisen.

9. Stromversorgungswagen (1) nach einem der Ansprüche 1 - 8, **dadurch gekennzeichnet, dass** das Chassis (10) eine Schaltkammer (100C) aufweist, die vorzugsweise unterhalb der Batteriekammern (100A, 100B) angeordnet ist und innerhalb der der Wechselrichter (95) angeordnet ist.

10. Stromversorgungswagen (1) nach einem der Ansprüche 1 - 9, **dadurch gekennzeichnet, dass** das Chassis (10) beidseits mit je zwei Halterungen (182) verbunden ist, die paarweise je einen Tragholm (18), der beidseits mit Traggriffen versehen ist, verschiebbar und fixierbar halten.

11. Stromversorgungswagen (1) nach einem der Ansprüche 1 - 10, **dadurch gekennzeichnet, dass** der Wechselrichter (95), der in einer ersten Betriebsart eine Wechselrichterfunktion und in einer zweiten Betriebsart eine Ladefunktion aufweist, von der zentralen Steuereinheit (9) mittels eines zentralen Steuerprogramms (91) derart steuerbar ist,
a) dass mit der Ladefunktion eine vom Stromversorgungsnetz (SN) über eine erste Wechselspannungsleitung (951) an den Wechselrichter (95) angelegte Wechselspannung in eine Gleichspannung wandelbar ist, die an einer Gleichspannungsleitung (952) anliegt, die mit den Batterien (2A, 2B) verbunden oder verbindbar ist; und/oder
b) dass mit der Wechselrichterfunktion eine von den Batterien (2A, 2B) an die Gleichspannungsleitung (953) angelegte Gleichspannung vom Wechselrichter (95) in eine Wechselspannung wandelbar ist, die an einer zweiten Wechselspannungsleitung (952) anliegt, die mit dem Verbraucher (99) verbindbar ist.

12. Stromversorgungswagen (1) nach einem der Ansprüche 1 - 11, **dadurch gekennzeichnet,**
a) **dass** die zentrale Steuereinheit (9) zur Überwachung des Zustands der Batterien (2A, 2B) vorgesehen ist, oder
b) **dass** jede der Batterien (2A, 2B) eine lokale Steuereinheit (90) mit einem lokalen Steuerprogramm (92) umfasst, die zur Überwachung des Zustands und/oder zur Steuerung der zugehörigen Batterie (2A, 2B) vorgesehen ist und die über einen Datenbus (999) mit der zentralen Steuereinheit (9) und gegebenenfalls weiteren benachbarten lokalen Steuereinheiten (90) zum Aufbau eines Netzwerks geeignet ist, über das Daten und Steuerbefehle zwischen den lokalen Steuereinheiten (90) und der zentralen Steuereinheit (9) und vorzugsweise zwischen den lokalen Steuereinheiten (90) untereinander austauschbar sind.

13. Stromversorgungswagen (1) nach einem der Ansprüche 1 - 12, **dadurch gekennzeichnet, dass** mittels der zentralen Steuereinheit (9) und/oder mittels der lokalen Steuereinheiten (90) je ein jeder Batterie (2A, 2B) zugeordneter Batterieschalter (6) individuell steuerbar ist, sodass die Batterien (2A, 2B) wahlweise einzeln und gemeinsam mit der Gleichspannungsleitung (952) verbindbar sind.

14. Stromversorgungswagen (1) nach einem der Ansprüche 1 - 13, **dadurch gekennzeichnet, dass** der Status, insbesondere die Batteriespannung, der Batteriestrom und/oder die Batterietemperatur, jeder Batterie (2A, 2B) von der zentralen Steuereinheit (9) ermittelbar ist und/oder von den lokalen Steuereinheiten (90) ermittelbar und zur zentralen Steuereinheit (9) übertragbar ist und dass die Batterien (2A, 2B) nur dann mit der Gleichspannungsleitung (952) verbindbar sind, falls der Status jeder Batterie (2A, 2B) dies gemäss der Vorgabe eines Protokolls erlaubt.

15. Stromversorgungswagen (1) nach einem der Ansprüche 1 - 14, **dadurch gekennzeichnet, dass** die vom Wechselrichter (95) abgegebene Wechselspannung mit der Wechselspannung des Stromversorgungsnetzes (SN) synchronisierbar ist, sodass dem Verbraucher (99) gleichzeitig ein Wechselstrom vom Stromversorgungsnetz (SN) und ein Wechselstrom vom Wechselrichter (95), der die von den Batterien (2A, 2B) abgegebene Gleichspannung in eine Wechselspannung wandelt, zuführbar sind.
